# EUROPEAN PATENT SPECIFICATION

(11) **EP 3 994 513 B1**
(45) Date of publication and mention of the grant of the patent: **07.10.2026**
(21) Application number: 19749304.2
(22) Date of filing: 31.07.2019
(51) Int. Cl.: G02B 13/00, G02B 13/06, G02B 13/18

(54) **IMAGE CAPTURING LENS ASSEMBLY, IMAGE CAPTURING DEVICE, AND ELECTRONIC DEVICE**
BILDERFASSUNGSLINSENANORDNUNG, BILDERFASSUNGSVORRICHTUNG UND ELEKTRONISCHE VORRICHTUNG
ENSEMBLE LENTILLE DE CAPTURE D'IMAGE, DISPOSITIF DE CAPTURE D'IMAGE ET DISPOSITIF ÉLECTRONIQUE

(43) Date of publication of application: 11.05.2022
(73) Proprietor: Huawei Technologies Co., Ltd., Longgang District Shenzhen, Guangdong 518129 (CN)
(72) Inventor: HSU, Yun, Chiang, 80992 Munich (DE); CHIANG, Yita, 80992 Munich (DE); BRUECKNER, Andreas, 80992 Munich (DE); MANSSEN, Daniel, 80992 Munich (DE)
(74) Representative: Roth, Sebastian
(86) International application number: PCT/EP2019/070585
(87) International publication number: WO 2021/018391

(56) References cited:
- WO-A1-2018/136058
- WO-A1-2018/230034
- AU-A1- 2017 203 034
- US-A1- 2016 004 041
- US-A1- 2017 212 334

## Description

### TECHNICAL FIELD

The present invention relates generally to the field of optical imaging systems, and particularly provides an (e.g. ultra-wide angle) optical imaging system comprising at least one freeform lens element. This invention also provides a camera system that includes such an optical imaging system. Moreover, this invention provides a mobile device that comprises the optical imaging system or the camera system.

### BACKGROUND

Conventional ultra-wide-angle optical imaging systems for smartphones or compact consumer cameras with a Field-Of-View (FOV) of more than 100°, suffer from high optical distortion. Moreover, the typical relative distortion values are larger than 10% or smaller than -10%. Such distortion has a negative impact on the quality of captured images and/or recorded videos. In particular, the distortion results in an unnatural (i.e. distorted) appearance of geometrical image details (e.g., rounding of straight lines, etc.).

In order to avoid the negative impact of the distortion, typically, the distortion is compensated by available software algorithms and in an image or video post-processing step. However, this negatively affects the quality of the captured images and/or recorded videos. Furthermore, it results in a smaller useable image circle, and thus a reduced FOV. Moreover, such image or video post-processing steps are time-consuming, and thus it is not possible to take real-time videos with software correction. Besides, the post-processing is computationally intensive, and thus results in high Central Processing Unit (CPU) workload and, consequently, requires higher battery or energy consumption. Furthermore, the post-processing may also generate non-realistic image artefacts.

US 2017/212334 A1 discloses lens system and camera system including the lens system.

WO 2018/136058 A1 discloses a terahertz-gigahertz fisheye lens system.

US 2016/004041 A1 discloses an imaging lens, and an electronic apparatus including the lens.

AU 2017 203 034 A1 discloses a compensation lens.

### SUMMARY

In view of the above-mentioned disadvantages, the embodiments of the present invention aim to improve conventional optical imaging systems and methods. An objective is to provide an optical imaging system that suffers from less distortion, in particular both optical distortion and SMIA TV distortion. As a consequence, no image and/or video post-processing should be required. Further, the optical imaging system should also provide an excellent Modulation Transfer Function (MTF) and low F-number, as well as a good miniaturization meaning a small Total Track Length/Image Height ratio. Overall, the optical imaging system and methods should provide improved image quality.

The objective is achieved by the embodiments provided in the enclosed independent claims. Advantageous implementations of the embodiments are further defined in the dependent claims.

A first aspect of the invention provides an optical imaging system, comprising two or more freeform surfaces arranged sequentially in direction of a light path through the optical imaging system, wherein the two or more freeform surfaces comprise a first freeform surface having a XY polynomial freeform, and a second freeform surface having an anamorph freeform, wherein the first freeform surface is arranged before the second freeform surface in direction of the light path through the optical imaging system.

Further, the XY polynomial freeform is determined by coefficients corresponding to *xⁿy^{m}* terms, and only terms with a product of n and m being an even number have a non-zero value.

The optical imaging system may be, for example, an image capturing lens assembly. Each freeform surface may form a surface of a lens elements in the optical imaging system. Moreover, the two or more freeform surfaces may be arranged in one or more sequences of freeform surfaces in direction of the light path through the optical imaging system.

In some embodiments, for each sequence there may be an optical transparent material or an air gap between the two or more freeform surfaces.

In some embodiments, the first freeform surface and the second freeform surface from the two or more freeform surfaces may be included in one freeform lens element. For example, in some embodiments, the imaging system may comprise one or more freeform lens elements, wherein each freeform lens element includes the first freeform surface on one side of the freeform lens element and the second freeform surface on an opposite side of the freeform lens element.

In some embodiments, the optical imaging system may be based on an (ultra-)wide angle optical imaging system, for instance with a FOV between 70° and 180°, which comprises at least one freeform lens with two freeform surfaces.

The two or more freeform surfaces can greatly reduce the optical distortion for example, the distortion is between -10% and + 10%, and the SMIA TV distortion (e.g., to less than 5%) of the optical imaging system. Moreover, there is no distortion compensation needed by software post-processing, and the negative effects of distortion on a captured image or recorded video are prevented. The optical imaging system can also provide an excellent Modulation Transfer Function (MTF) and F-number as well as a comprehensive Total Track Length/Image Height ratio (e.g., the TTL/ImgH may be less than two). In consequence, the optical imaging system of the first aspect provides improved image and/or video quality.

The two different freeform surfaces may ensure a balance between design flexibility and the number of degrees of design freedom. The first freeform surface has larger degree of design freedom (typically more than 25 variables), and can thus provide high flexibility in the design of one or more lens elements, i.e. in order to correct certain image aberrations, e.g., mainly distortion. However, when one would use two first freeform surface descriptions (for example, the same kind of freeform surface may be used, however, each surface may have different a coefficient and thus a different shape) for the freeform lens element(s), too many free parameters would be the result, and a lens optimization algorithm would have difficulties to find a good design solution. The second freeform surface has fewer degrees of freedom (typically less than 20 variables). However, it may be customized to adjust the distortion on a rectangular image sensor with non-quadratic shape. When one would use two second freeform surface descriptions, there may not be enough degrees of freedom, and thus a good design solution may not be found, i.e., there may be a need to compromise on either distortion, F-number, MTF or TTL/ImgH.

In a further implementation form of the first aspect, a sag-height profile of the first freeform surface is different from a sag-height profile of the second freeform surface.

In a further implementation form of the first aspect, further comprising one or more freeform lens elements, wherein each freeform lens element includes the first freeform surface on one side of the freeform lens element and the second freeform surface on an opposite side of the freeform lens element.

In a further implementation form of the first aspect, the one or more freeform lens elements are arranged as a first set of lenses and/or as a last set of lenses in direction of the light path through the optical imaging system.

In a further implementation form of the first aspect, the one or more freeform lens elements are made of glass and/or optically transparent material (e.g. plastic).

In a further implementation form of the first aspect, the XY polynomial freeform of the first freeform surface is defined by: $z = \frac{c {r}^{2}}{1 + \sqrt{1 - \left(1+k\right) {c}^{2} {r}^{2}}} + {\sum }_{i = 1}^{N} {A}_{i} {E}_{i} \left(x, y\right) ,$ Eq (1) wherein z corresponds to a sag-height profile of the first freeform surface, wherein $r = \sqrt{{x}^{2} + {y}^{2}}$ corresponds to a radial coordinate in base plane of the freeform surface, wherein c corresponds to the inverse of the radius of curvature of the freeform surface, wherein k corresponds to a conic of the freeform lens element, wherein *Aᵢ* corresponds to i-th polynomial coefficient of the XY polynomial freeform, wherein *Eᵢ* corresponds to the x, y polynomial terms of respective order *i,* wherein *x, y* corresponds to spatial coordinates in the Cartesian base plane of the freeform surface, wherein i corresponds to an order of a determined coefficient, and wherein N corresponds to the maximum number of the coefficients.

In a further implementation form of the first aspect, the anamorph freeform of the second freeform surface is defined by: $\begin{matrix}Z = \frac{{C}_{x} \left(x∗x\right) + {C}_{y} \left(y∗y\right)}{1 + \sqrt{1 - \left(\left(\left(1+{k}_{x}\right)∗{{C}_{x}}^{2}∗{X}^{2}\right)-\left(\left(1+{k}_{y}\right)∗{{C}_{y}}^{2}∗{Y}^{2}\right)\right)}} + AR \\ ∗ {\left(\left(1-AP\right)∗x∗x+\left(1+AP\right)∗y∗y\right)}^{2} \\ + BR ∗ {\left(\left(1-BP\right)∗x∗x+\left(1+BP\right)∗y∗y\right)}^{3} \\ + CR ∗ {\left(\left(1-CP\right)∗x∗x+\left(1+CP\right)∗y∗y\right)}^{4} \\ + DR ∗ {\left(\left(1-DP\right)∗x∗x+\left(1+DP\right)∗y∗y\right)}^{5} \\ + ER ∗ {\left(\left(1-EP\right)∗x∗x+\left(1+EP\right)∗y∗y\right)}^{6} \\ + FR ∗ {\left(\left(1-FP\right)∗x∗x+\left(1+FP\right)∗y∗y\right)}^{7} \\ + GR ∗ {\left(\left(1-GP\right)∗x∗x+\left(1+GP\right)∗y∗y\right)}^{8}\end{matrix}$ Eq (2) wherein z corresponds to the sag-height profile of the second freeform surface, wherein *Cₓ* and *C_{y}* corresponds to the inverse of the radius of curvatures of the freeform surface in x- and y-direction, respectively, wherein *kₓ* and *k_{y}* corresponds to conics of the freeform surface in x- and y-direction, respectively, wherein *x, y* corresponds to spatial coordinates in the Cartesian base plane of the freeform surface, wherein *AP, BP, CP, DP, EP, FP* and *GP* correspond to the anamorphic scaling factors, and wherein *AR, BR, CR, DR, ER, FR* and GR correspond to the anamorphic coefficients.

In a further implementation form of the first aspect, the optical imaging system further comprises seven or more lens elements.

In particular, the seven or more lens elements may include the one or more freeform lens elements.

In a further implementation form of the first aspect, the optical imaging system further comprises a plurality of lens elements, wherein:
- a first group of lens elements is arranged in front of an aperture stop of the optical imaging system such that chief-ray angles *CRA*_in over the Field of View (FOV) entering the first lens group are larger than chief-ray angles *CRA_aperture* over the FOV leaving the first lens group.

In particular, in some embodiments, the first group of lens may include the one or more freeform lens elements.

In a further implementation form of the first aspect, a second group of lens elements is arranged between the aperture stop of the optical imaging system and the last or second last lens element of the optical imaging system, wherein the second group comprises one or more lens elements and has the highest refractive power of all of lens groups of the optical imaging system.

In a further implementation form of the first aspect, a third group of lens elements is arranged between the second group and including the last lens element of the optical imaging system, wherein each lens element in the third group has two or more inflection points across its sag-height profile cross-section.

A sag-height profile cross-section for a respective (freeform) lens element, in particular (freeform) lens surface, is defined as a resulting sag-height curve obtained by determining a straight cut through the respective (freeform) lens element, wherein the straight cut contains the optical axis of the lens element.

In a further implementation form of the first aspect, at least one lens element has a ratio of an edge-thickness to a center-thickness of less than three.

In a further implementation form of the first aspect, the optical imaging system configured to provide a FOV between 70° and 180°.

In a further implementation form of the first aspect, a ratio of a total track length of the optical imaging system to an image height of an image produced by the optical imaging system is less than two.

A second aspect of the invention provides a camera system, comprising an image sensor, and the optical imaging system according to the first aspect or one of the implementation form of the first aspect, configured to produce an image on the image sensor.

The camera system may comprise a circuitry. The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the camera system to perform the operations or methods described herein.

In an implementation form of the second aspect, the first freeform surface and/or the second freeform surface of the optical imaging system has a radial asymmetry, with a ratio of the tangential curvature in one direction to the tangential curvature in a perpendicular direction, at all radial distances from the optical axis, is between -2H and +2H, wherein H is an aspect ratio of the image sensor.

In particular, the first freeform surface and the second freeform surface may only have minor radial asymmetry. For example, the ratio of the tangential curvature of the sag-height profile cross-section in x direction and the tangential curvature of the sag-height profile cross-section in y direction, at any radial distance r, with respect to the optical axis will fulfil the condition of *"-2H < tangential curvature x (r)* / *tangential curvature y (r) < 2H*". Here, the parameter H is the aspect ratio of the image sensor, and may be determined according to $H = \frac{{x}_{sensor}}{{y}_{sensor}}$, and with *x*ₛₑₙₛₒᵣ ≥ *y*ₛₑₙₛₒᵣ.

A third aspect of the invention provides a mobile device, in particular a mobile phone, comprising the optical imaging system according to the first aspect or one of the implementation form of the first aspect or the camera system according to the second aspect or one of the implementation form of the second aspect.

The camera may be incorporated at front and/or rear side of the mobile device.

The mobile device may be, or may incorporated in, for example, an electronic device, a computer, a smart phone, a tablet, a laptop, a digital camera, an action-camera, a vehicle, an-unmanned vehicle (e.g., a drone), etc.

The mobile device may comprise a circuitry. The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the mobile device to perform the operations or methods described in the aspects and implementation forms above.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: is a schematic view of an optical imaging system comprising two freeform surfaces, according to an embodiment of the present invention;
- FIG. 2: is a schematic view of a camera system comprising an optical imaging system, according to an embodiment of the present invention;
- FIG. 3: is a schematic view of a mobile device, according to an embodiment of the present invention;
- FIG. 4: is a schematic view of a system including the optical imaging system comprising seven lens elements including a freeform lens element, according to an embodiment of the present invention;
- FIG. 5: illustrates a ratio of "*CRA*_in/*CRA*_aperture" as a function of the FOV angle for a first group of lens elements of the optical imaging system of FIG. 4;
- FIG. 6: illustrates a ratio of tangential curvature in x and y direction for the second freeform surface of the freeform lens element of the optical imaging system of FIG. 4;
- FIG. 7: illustrates a ratio of tangential curvature in x and y direction for the first freeform surface of the freeform lens element of the optical imaging system of FIG. 4;
- FIG. 8: illustrates modulation transfer functions (MTFs) for on-axis and off-axis fields, of the optical imaging system of FIG. 4;
- FIGs. 9a and 9b: illustrate optical distortion along x and y direction, respectively, at central design wavelength of 588 nm, of the optical imaging system of FIG. 4.
- FIG. 10: illustrates grid distortion on a rectangular image sensor at the central design wavelength of 588 nm, of the optical imaging system of FIG. 4.

### DETAILED DESCRIPTION OF EMBODIMENTS

The following section describe example embodiments of the invention, accompanied with drawings and technical descriptions.

The specific term "example" herein means "used as an example embodiment or illustration". Any embodiment described as an "example" is not necessarily superior or better than other embodiments. Any Embodiment detail that presents a well-known state of the art is described in pure implementation manners. A person skilled in the art shall understand that the invention can still be implemented even without further notes on those well-known details. In other means well-known methods or elements are not described in greater detail, so as to highlight the theme and specifics of the presented invention.

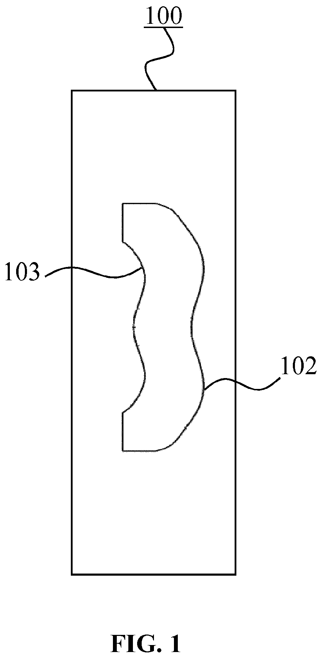

FIG. 1 is a schematic view of an optical imaging system 100 comprising two or more freeform surfaces, according to an embodiment of the invention.

Without limiting the present disclosure, in the embodiment of FIG. 1, it is assumed that the optical imaging system 100 comprises two freeform surfaces arranged sequentially in direction of a light path through the optical imaging system 100.

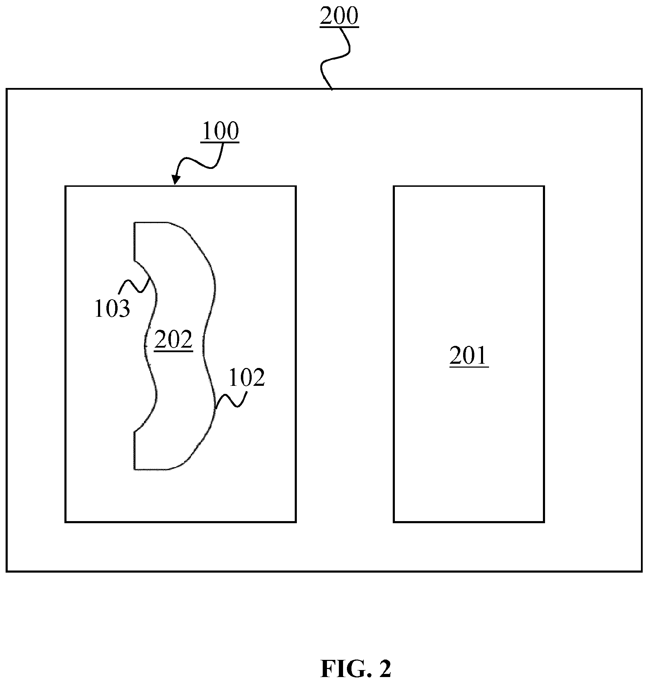

The two freeform surfaces of the optical imaging system comprise a first freeform surface 102 having a XY polynomial freeform, and a second freeform surface 103 having an anamorph freeform. The two or more freeform surfaces are two or more freeform lens surfaces. That is, the two freeform surfaces shown in FIG. 1 can be the surfaces of one or two freeform lens elements 202 (e.g. shown in FIG. 2). The optical imaging system 100 may comprise a freeform lens element 202 with the first freeform surface 102 on one side, and the second freeform surface 103 on the other side. The optical imaging system 100 may also comprise two freeform lens elements 202, wherein each freeform lens element 202 has one of the two freeform surfaces 102, 103 on one of its sides.

For example, the XY polynomial freeform of the first freeform surface 102 may be defined by: $z = \frac{c {r}^{2}}{1 + \sqrt{1 - \left(1+k\right) {c}^{2} {r}^{2}}} + {\sum }_{i = 1}^{N} {A}_{i} {E}_{i} \left(x, y\right) ,$ Eq. (3) wherein z corresponds to a sag-height profile of the first freeform surface, wherein $r = \sqrt{{x}^{2} + {y}^{2}}$ corresponds to a radial coordinate in base plane of the freeform surface, wherein c corresponds to the inverse of the radius of curvature of the freeform surface, wherein k corresponds to a conic of the freeform lens element, wherein *Aᵢ* corresponds to i-th polynomial coefficient of the XY polynomial freeform, wherein *Eᵢ* corresponds to the x, y polynomial terms of respective order i, wherein *x, y* corresponds to spatial coordinates in the Cartesian base plane of the freeform surface, wherein i corresponds to an order of a determined coefficient, and wherein N corresponds to the maximum number of the coefficients.

Moreover, for example, the anamorph freeform of the second freeform surface 103 may be defined by: $\begin{matrix}Z = \frac{{C}_{x} \left(x∗x\right) + {C}_{y} \left(y∗y\right)}{1 + \sqrt{1 - \left(\left(\left(1+{k}_{x}\right)∗{{C}_{x}}^{2}∗{X}^{2}\right)-\left(\left(1+{k}_{y}\right)∗{{C}_{y}}^{2}∗{Y}^{2}\right)\right)}} + AR \\ ∗ {\left(\left(1-AP\right)∗x∗x+\left(1+AP\right)∗y∗y\right)}^{2} \\ + BR ∗ {\left(\left(1-BP\right)∗x∗x+\left(1+BP\right)∗y∗y\right)}^{3} \\ + CR ∗ {\left(\left(1-CP\right)∗x∗x+\left(1+CP\right)∗y∗y\right)}^{4} \\ + DR ∗ {\left(\left(1-DP\right)∗x∗x+\left(1+DP\right)∗y∗y\right)}^{5} \\ + ER ∗ {\left(\left(1-EP\right)∗x∗x+\left(1+EP\right)∗y∗y\right)}^{6} \\ + FR ∗ {\left(\left(1-FP\right)∗x∗x+\left(1+FP\right)∗y∗y\right)}^{7} \\ + GR ∗ {\left(\left(1-GP\right)∗x∗x+\left(1+GP\right)∗y∗y\right)}^{8}\end{matrix}$ Eq. (4) wherein z corresponds to the sag-height profile of the second freeform surface, wherein *Cₓ* and *C_{y}* corresponds to the inverse of the radius of curvatures of the freeform surface in x- and y-direction, respectively, wherein *kₓ* and *k_{y}* corresponds to a conic of the freeform surface in x- and y-direction, respectively, wherein *x, y* corresponds to spatial coordinates in the Cartesian base plane of the freeform surface, wherein *AP, BP, CP, DP, EP, FP* and *GP* correspond to the anamorphic scaling factors, and wherein *AR, BR, CR, DR, ER, FR* and *GR* correspond to the anamorphic coefficients.

FIG. 2 shows a schematic view of a camera system 200, according to an embodiment of the invention.

The camera system 200 illustrated in FIG. 2 exemplarily comprises the optical imaging system 100 and an image sensor 201. The camera system 200 is configured to produce an image on the image sensor 201, as it is generally known to the skilled person.

Without limiting the present disclosure, in the optical system 100 of FIG. 2, the two freeform surfaces are included in one freeform lens element 202. That means, the freeform lens element 202 has the first freeform surface 102 on one side, and the second freeform surface 203 on the other side. In some embodiments, the optical imaging system 100 may comprise more than one freeform lens elements 202.

The camera system 200 may comprise a circuitry (not shown in FIG. 2). The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the camera system to perform the operations or methods described herein.

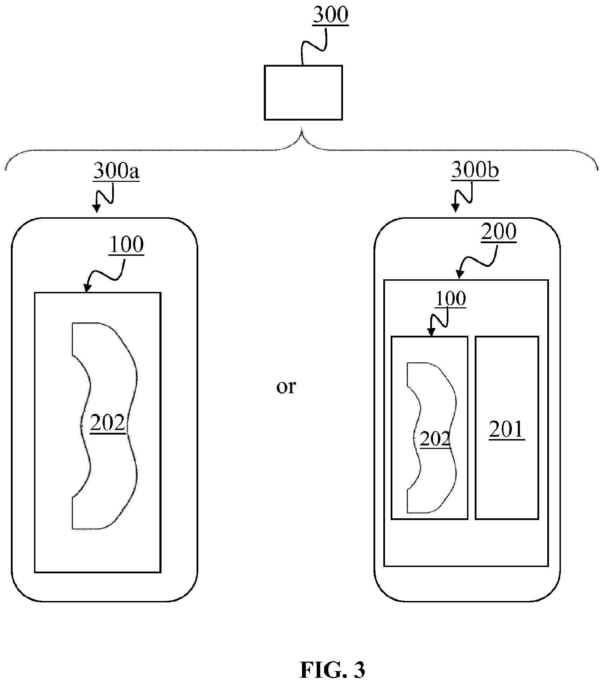

FIG. 3 shows a schematic view of a mobile device 300, according to an embodiment of the invention.

In some embodiments, the mobile device 300 may be a mobile device (i.e., indicated with the reference 300a) comprising the optical imaging system 100. In some embodiments, the mobile device 300 may be a mobile device (i.e., indicated with the reference 300b) comprising the camera system 200, which includes the optical imaging system 100 and the image sensor 201.

The mobile device 300 may comprise a circuitry (not shown in FIG. 3). The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the mobile device to perform the operations or methods described herein.

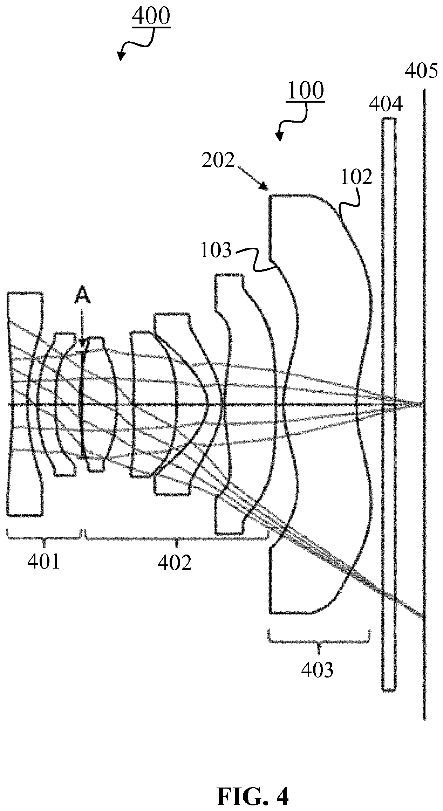

FIG. 4 shows a schematic view of a cross-section of an ultra-wide angle optical imaging system 100 comprising seven lens elements including the freeform lens element 202, according to an embodiment of the invention. In some embodiments, the optical imaging system 100 may comprise more than seven lens elements.

Table 1, shown below, includes corresponding optical data and Tables 2a, 2b and 2c include corresponding aspheric surface data, for the optical imaging system 100.

The aspheric data are described by Qbfs aspheres, Qcon aspheres (e.g., references given in Table 2a), even aspheres or extended odd aspheres. Moreover, the even aspheres are described by the following equation (Eq. 5): $\begin{matrix}z \left(r\right) = \frac{c {r}^{2}}{1 + \sqrt{1 - \left(1+k\right) {c}^{2} {h}^{2}}} + {A}_{4} {r}^{4} + {A}_{6} {r}^{6} + {A}_{8} {r}^{8} + {A}_{10} {r}^{10} + {A}_{12} {r}^{12} + {A}_{14} {h}^{14} + \\ {A}_{16} {r}^{16}\end{matrix}$ Eq. (5)

Moreover, the extended odd aspheres are described by the following equation (Eq. 6) as follow: $z \left(r\right) = \frac{c {r}^{2}}{1 + \sqrt{1 - \left(1+k\right) {c}^{2} {r}^{2}}} + {\sum }_{i = 1}^{N} {α}_{i} {ρ}^{i} ,$ Eq. (6) wherein *αᵢ* corresponds to the i-th higher order asphere coefficients, and wherein *ρ =* |*r*/*r*₀| corresponds to the absolute value of the normalized radial distance, with *r*₀ being the normalization radius.

**Table 1: Optical data of ultra-wide angle lens system given in Fig. 4. * - Data in Table 3.**

| EFL = 2.9 mm, FOV = 117 deg, F-number=1.85, TTL = 6.99 mm | | | | | | | |
|---|---|---|---|---|---|---|---|
| **Element** | **Surf-Type** | **Radius** | **Thickness** | **Material** | **Refractive Index** | **Abbe #** | **Conk constant** |
| Object | STANDARD | Plano | Infinity | | | | 0.00E+00 |
| L1 S1 | QED_TYPE | -1.53E+01 | 2.44E-01 | Plastic | 1.545 | 55.98 | -5.61E+01 |
| L1 S2 | EVENASPH | 2.78E+00 | 1.75E-01 | | | | -1.41E+00 |
| L2 S1 | EVENASPH | 2.60E+00 | 3.07E-01 | Plastic | 1.615 | 25.92 | 9.49E-01 |
| L2 S2 | XOSPHERE | 5.14E+00 | 4.52E-01 | | | | 1.30E+01 |
| Aperture Stop | STANDARD | Plano | -3.97E-02 | | | | 0.00E+00 |
| L3 S1 | QED_TYPE | 4.08E+00 | 6.25E-01 | Plastic | 1.545 | 55.98 | 3.95E+00 |
| L3 S2 | QED_TYPE | -3.08E+00 | 2.88E-01 | | | | 6.02E+00 |
| L4 S1 | QED_TYPE | -5.82E+00 | 7.35E-01 | Plastic | 1.545 | 55.98 | -2.18E+02 |
| L4 S2 | QED_TYPE | -2.41E+00 | 5.21E-01 | | | | 2.16E+00 |
| L5 S1 | QED_TYPE | -4.72E-01 | 2.47E-01 | Plastic | 1.661 | 20.37 | -1.81E+00 |
| L5 S2 | QED_TYPE | -9.08E-01 | 4.58E-02 | | | | -4.78E+00 |
| L6 S1 | QED_TYPE | 3.16E+00 | 8.66E-01 | Plastic | 1.545 | 55.98 | -1.64E+01 |
| L6 S2 | EVENASPH | -1.48E+01 | 1.29E-01 | | | | -2.20E+01 |
| L7 S1 | Freeform Surf Type B | * | 1.24E+00 | Plastic | 1.545 | 55.98 | * |
| L7 S2 | Freeform Surf Type A | * | 4.50E-01 | | | | * |
| IR-Cut | STANDARD | Plano | 2.10E-01 | Glass | 1.5168 | 64.17 | 0.00E+00 |
| | STANDARD | Plano | 4.96E-01 | | | | 0.00E+00 |
| Sensor | STANDARD | Plano | 0.00E+00 | | | | 0.00E+00 |

**Table 2a: Aspheric surface data of the ultra-wide angle lens system 100. The QED-Type Aspheres are also called Qbfs (= Type 0) and Qcon (= Type 1). The Qcon surface is described in G. W. Forbes, "Shape specification for axially symmetric optical surfaces ", Opt. Express, Vol. 15, 5218 - 5226 (2007). The Qbfs surface is described in G. W. Forbes, "Manufacturability estimates for optical surfaces ", Opt. Express, Vol. 19, 9923-9941 (2011).**

| **QED-Type Coefficients** | | | | | | | | | | | | |
|---|---|---|---|---|---|---|---|---|---|---|---|---|
| **Element** | **Type** | **Norm Radius** | **A0** | **A1** | **A2** | **A3** | **A4** | **A5** | **A6** | **A7** | **A8** | **A9** |
| L1 S1 | 0 | 1.71E+00 | -5.43E-02 | -2.28E-02 | 3.53E-03 | -2.15E-03 | -1.11E-04 | -1.04E-04 | -1.78E-04 | 1.73E-04 | -1.24E-04 | 0.00E+00 |
| L3 S1 | 0 | 1.01E+00 | -4.83E-02 | 3.44E-02 | -1.43E-02 | 2.18E-03 | 1.55E-03 | -1.74E-03 | 1.25E-03 | -6.17E-04 | 1.80E-04 | 0.00E+00 |
| L3 S2 | 0 | 1.10E+00 | -1.39E-01 | 7.83E-02 | -2.57E-02 | 7.41E-03 | -1.83E-03 | 1.56E-04 | 3.80E-04 | -2.01E-04 | 8.45E-05 | 0.00E+00 |
| L4 S1 | 0 | 1.22E+00 | 1.07E-01 | -3.34E-03 | 2.77E-02 | -1.18E-02 | 3.52E-03 | 3.51E-04 | -1.40E-04 | 1.43E-04 | -1.47E-05 | 0.00E+00 |
| L4 S2 | 0 | 1.29E+00 | -5.44E-02 | 9.57E-02 | -2.91E-02 | -2.87E-04 | 8.60E-04 | 1.17E-03 | -1.41E-03 | 5.49E-04 | -9.67E-05 | 0.00E+00 |
| L5 S1 | 0 | 1.28E+00 | -1.38E-02 | 7.48E-02 | -L99E-02 | 7.71E-03 | 7.63E-04 | -8.35E-04 | -5.69E-04 | 6.97E-04 | 2.06E-04 | 0.00E+00 |
| L5 52 | 1 | 1.58E+00 | -4.11E-02 | 6.56E-02 | -3.44E-02 | -4.19E-02 | -2.91E-02 | -2.41E-03 | 3.25E-02 | 5.86E-02 | 7.12E-02 | 7.01E-02 |
| L6 S1 | 1 | 1.85E+00 | -5.62E-01 | 5.49E-02 | 1.35E-01 | 4.37E-02 | -4.49E-02 | -9.11E-02 | -8.95E-02 | -7.61E-02 | -6.44E-02 | -6.00E-02 |
| | | | | | | | | | | | | |

| **Element** | **Type** | **A10** | **A11** | **A12** | **A13** | **A14** | **A15** | **A16** | **A17** | **A18** | **A19** | |
|---|---|---|---|---|---|---|---|---|---|---|---|---|
| L1 S1 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L3 S1 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L3 S2 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L4 S1 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L4 S2 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L5 S1 | 0 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | |
| L5 S2 | 1 | 5.89E-02 | 4.29E-02 | 2.71E-02 | 1.48E-02 | 6.86E-03 | 2.70E-03 | 8.52E-04 | 2.71E-04 | 6.22E-05 | 3.22E-05 | |
| L6 S1 | 1 | -5.46E-02 | -4.50E-02 | -3.15E-02 | -1.85E-02 | -8.84E-03 | -3.23E-03 | -7.28E-04 | 1.24E-04 | 1.86E-04 | 1.04E-04 | |

**Table 2b: Aspheric surface data of the ultra-wide angle lens system 100. Even aspherical (Evenasph) surfaces are described by Eq. 5.**

| **Evenasph Coefficients** | | | | | | | |
|---|---|---|---|---|---|---|---|
| **Element** | **A4** | **A6** | **A8** | **A10** | **A12** | **A14** | **A16** |
| L1 S2 | -4.16E-02 | -1.98E-02 | 6.43E-02 | -3.05E-02 | -2.31E-03 | 3.51E-03 | -5.29E-04 |
| L2 S1 | -5.32E-03 | -3.61E-02 | 2.05E-01 | -2.08E-01 | 1.36E-01 | -6.08E-02 | 2.51E-03 |
| L6 S2 | -2.74E-02 | 6.34E-03 | -2.73E-03 | -3.92E-04 | 2.95E-04 | -5.59E-05 | 6.28E-06 |

**Table 2c: Aspheric surface data of the ultra-wide angle lens system 100.The extended odd aspherical (xosphere) surfaces are described by Eq. 6.**

| | | | | | | | | | | | |
|---|---|---|---|---|---|---|---|---|---|---|---|
| **XOSPHERE Coefficients** | | | | | | | | | | | |
| **Element** | **Norm Radius** | **A1** | **A2** | **A3** | **A4** | **A5** | **A6** | **A7** | **A8** | **A9** | **A10** |
| L2 S2 | 1.01E+00 | 0.00E+00 | 4.43E-08 | 9.76E-06 | 9.45E-02 | 6.09E-03 | 5.24E-02 | 2.84E-02 | 9.49E-03 | 2.09E-02 | 1.02E-02 |
| | | | | | | | | | | | |

| **Element** | **A11** | **A12** | **A13** | **A14** | **A15** | **A16** | **A17** | **A18** | **A19** | **A20** | |
|---|---|---|---|---|---|---|---|---|---|---|---|
| L2 S2 | -6.00E-03 | 8.53E-03 | 1.68E-02 | 8.86E-04 | -6.27E-03 | -1.92E-02 | -2.38E-02 | 2.64E-02 | 8.95E-03 | -4.12E-02 | |

Furthermore, Tables 3a and 3b, shown below, include surface data of the freeform lens element 202, which comprises the first freeform surface 102 and the second freeform surface 103.

The freeform lens element 202 is in this embodiment the last lens of the optical imaging system 100 included in the system 400 of FIG. 4, and comprises in sequence along the light path through the optical imaging system 100, first the second freeform surface 103 and then the first freeform surface 102. For the freeform surface 102 only coefficients corresponding to *xⁿy^{m}* terms with a product of n and m being an even number have a non-zero value.

The systems 400 may be the optical imaging system 100 and/or the camera system 200 and/or the mobile system 300, or the optical imaging system 100 and/or the camera system 200 and/or the mobile system 300 may be incorporated in the system 400, without limiting the present disclosure to a specific structure in that regard.

The optical imaging system 100 of FIG. 4 comprises in particular seven plastic lenses. The FOV of the optical imaging system 100 is exemplarily 117°. The system's F-number is exemplarily 1.85. Moreover, the image sensor aspect ratio H is exemplarily 1.337. The TTL/ImgH ratio is exemplarily 6.99mm/4.52mm=1.5. Furthermore, all of the lens elements have a ratio of an edge-thickness to a center-thickness of exemplarily less than three.

**Table 3a: Coefficients of freeform surface 103.**

| **Element** | **Cx** | **Cy** | **Kx** | **Ky** | **AR** | **BR** | **CR** | **DR** | **ER** | **FR** | **GR** |
|---|---|---|---|---|---|---|---|---|---|---|---|
| L7S1 | 5.89E-01 | 5.89E-01 | -4.36E+00 | -4.41E+00 | -5.27E-02 | 5.67E-03 | -1.01E-03 | 2.04E-04 | -4.40E-05 | 1.09E-05 | -106E-06 |
| | | | | | | | | | | | |

| **Element** | AP | **BP** | **CP** | **DP** | **EP** | **FP** | **GP** | | | | |
|---|---|---|---|---|---|---|---|---|---|---|---|
| L7 S1 | -6.91E-03 | -3.72E-02 | -6.32E-02 | -4.03E-02 | 1.26E-02 | 2.22E-02 | 1.53E-02 | | | | |

**Table 3b: Coefficients of freeform surface 102. All surface coefficients which are not given in this table are 0.**

| **Element** | **Radius** | **Conic Constant** | **Norm Radius** | **X4Y0** | **X2Y2** | **X0Y4** | **X6Y0** | X4Y2 | **X2Y4** | **X0Y6** | **X8Y0** | |
|---|---|---|---|---|---|---|---|---|---|---|---|---|
| L7 S2 | 2.37E+00 | -1.77E+00 | 9.10E-01 | -3.45E-02 | -6.68E-02 | -3.46E-02 | 2.94E-03 | 6.95E-03 | 7.82E-03 | 3.03E-03 | -9.53E-05 | |
| | | | | | | | | | | | | |

| Element | **X6Y2** | **X4Y4** | **X2Y6** | **X0Y8** | **X10Y0** | **X8Y2** | **X6Y4** | **X4Y6** | **X2Y8** | **X0Y10** | **X12Y0** | |
|---|---|---|---|---|---|---|---|---|---|---|---|---|
| L7 S2 | 6.22E-04 | 3.26E-04 | **-L02E-04** | -1.11E-04 | -1.06E-05 | -2.46E-04 | -4.00E-04 | -1.48E-04 | -7.59E-05 | 5.51E-07 | 3.61E-06 | |
| | | | | | | | | | | | | |

| Element | **X10Y2** | **X8Y4** | **X6Y6** | **X4Y8** | **X2Y10** | **X0Y12** | **X14Y0** | **X12Y2** | **X10Y4** | **X8Y6** | **X6Y8** | |
|---|---|---|---|---|---|---|---|---|---|---|---|---|
| L7 S2 | 2.38E-05 | 6.93E-05 | 3.24E-05 | 4.67E-06 | 7.62E-06 | -7.58E-07 | -4.26E-07 | -7.27E-07 | -4.68E-06 | -3.12E-06 | 1.63E-06 | |
| | | | | | | | | | | | | |

| Element | **X4Y10** | **X2Y12** | **X0Y14** | **X16Y0** | **X14Y2** | **X12Y4** | **X10Y6** | **X8Y8** | **X6Y10** | **X4Y12** | **X2Y14** | **X0Y16** |
|---|---|---|---|---|---|---|---|---|---|---|---|---|
| L7 S2 | 9.47E-07 | -9.69E-08 | 1.10E-07 | 1.56E-08 | -4.13E-09 | 9.52E-08 | 9.56E-08 | -1.21E-07 | -1.85E-07 | -6.52E-08 | -1.14E-08 | -3.92E-09 |

The ultra-wide angle optical imaging system 100 of FIG. 4 comprises three lens groups, namelyy a first group of lens element 401, a second group of lens element 402 and a third group of lens element 403.

The first group of lens elements 401 is arranged in front of an aperture stop (indicated with reference A in FIG. 4) of the optical imaging system 100, such that chief-ray angles over the FOV entering the first lens group 401 are larger than chief-ray angles over the FOV leaving the first lens group 401.

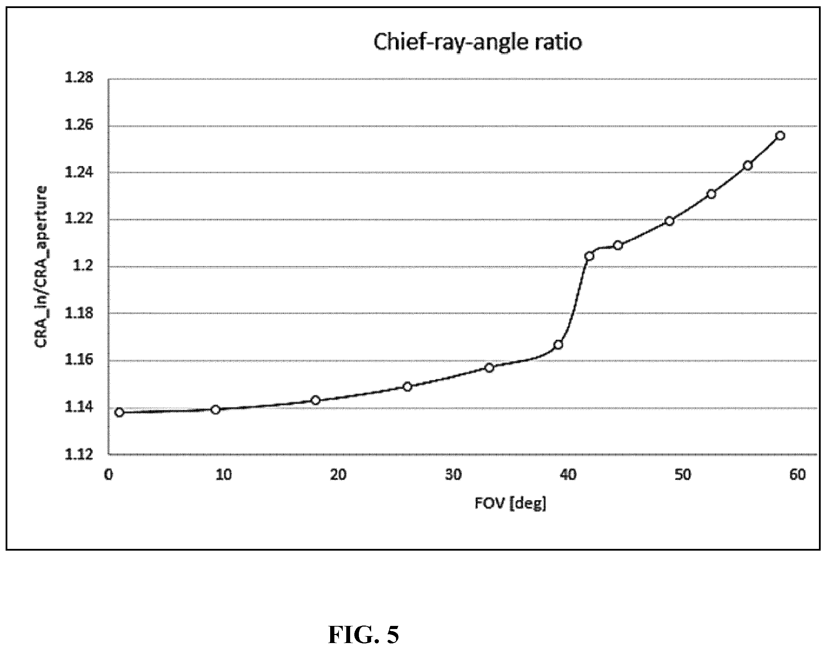

The first group of lens elements 401 may ensure that the chief ray angle, which is entering the lens system is demagnified in the aperture plane (i.e., *CRA_in* / *CRA_aperture >* 1) with *"CRA_in"* being chief-ray angles over the FOV entering the first group of lens elements 401 and *"CRA_aperture"* being the chief-ray angle in the aperture plane, respectively. FIG. 5 illustrates the ratio of *"CRA_in*/*CRA_aperture"* as a function of the FOV angle for the first group of lens elements 401 of the optical imaging system 100 of FIG. 4

In the diagram of demagnification of chief-ray angle by the first group of lens elements 401, the FOV direction is along the image sensor main diagonal.

The second group of lens elements 402 is arranged between the aperture stop (indicated with reference A in FIG. 4) of the optical imaging system 100 and the last lens element of the optical imaging system 100.

Moreover, the second group of lens elements 402 is the group of lens element which has the highest (paraxial) refractive power *"1*/*f*_{*g*2} *> 1*/*f*_{*g*1}" and *"1*/*f*_{*g*2} > *1*/*f*_{*g*3}", where *"f_{gN}"* is the effective focal length of group N, and in the example of FIG.4, there are the following values: ${f}_{g 1} = - 6.4 mm$ ${f}_{g 2} = 3.4 mm$ ${f}_{g 3} = 6.7 mm$

The third group of lens elements 403 is arranged between the second group of lens elements 402 and an image sensor 405. Moreover, the imaging system 100 may further include an Infrared (IR) cut filter and/or cover glass 404.

The lens elements of the third group of lens elements 403 have two or more inflection points across any cross-section of the sag profile.

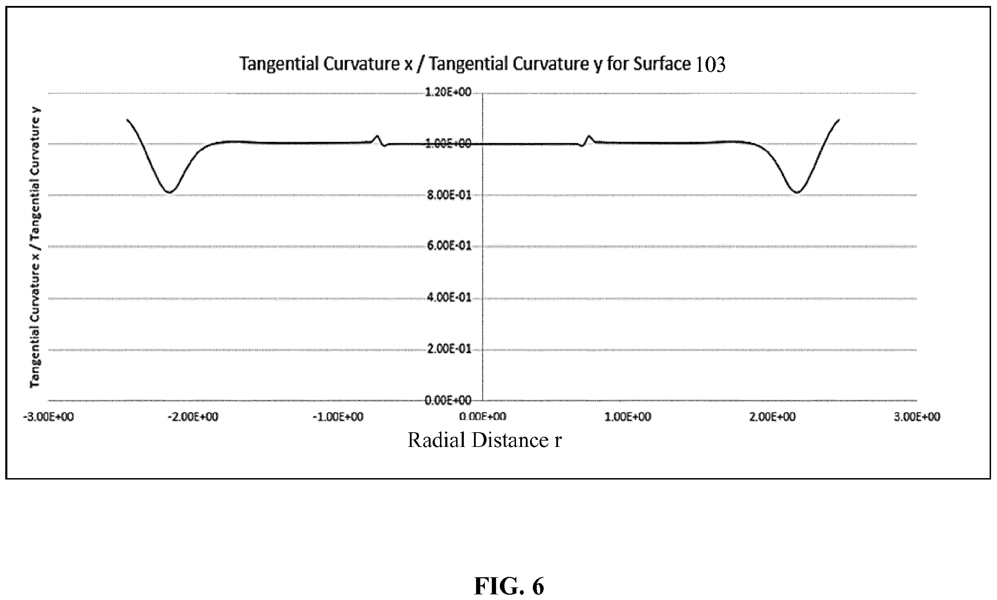

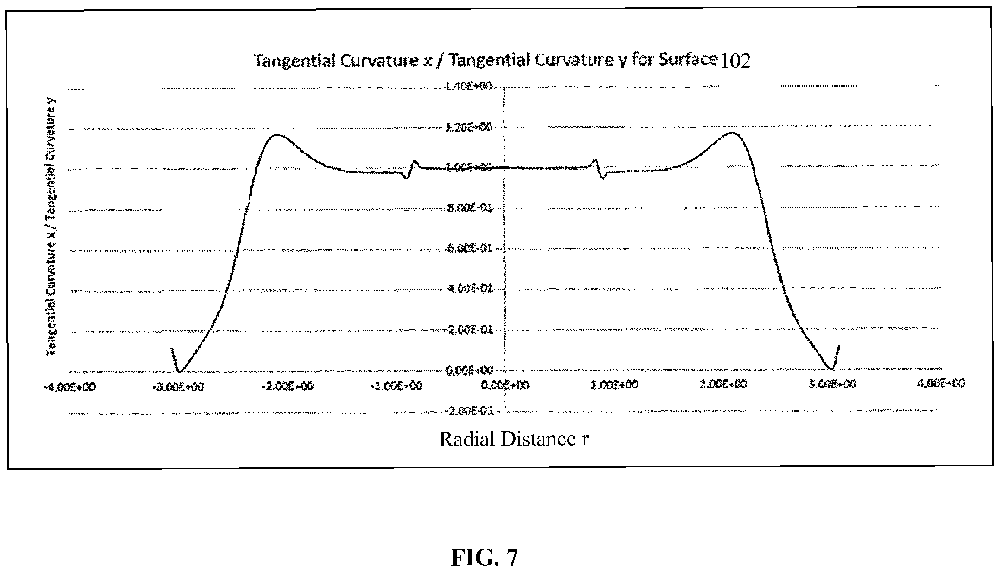

The freeform surfaces 103 and 102 (of the optical imaging system 100 of FIG. 4 in this example) fulfil the following equation (Eq. (7)), as shown in FIG. 6 and FIG. 7. The aspect ratio of the image sensor (H) is exemplarily 1.337. $- 2 H < tangential curvature x \left(r\right) / tangential curvature y \left(r\right) < 2 H$ Eq. (7)

Besides, the aspect ratio of the image sensor H may be determined according to the following equation (Eq. (8)): $H = \frac{{x}_{sensor}}{{y}_{sensor}}$ Eq. (8)

FIG. 6 illustrates the ratio of tangential curvature of the sag-height profile cross-sections in x and y direction for the second freeform surface 103 of the freeform lens element 202 of the optical imaging system 100 of FIG. 4.

As it can be derived from FIG. 6, the ratio is within the range of -2H and 2H for all surface heights/diameters *r*.

FIG. 7 illustrates the ratio of tangential curvature of the sag-height profile cross-sections in x and y direction for the first freeform surface 102 of the freeform lens element 202 of the optical imaging system 100 of FIG. 4.

As it can be derived from FIG. 7, the ratio of tangential curvature of the sag-height profile cross-sections in x and y direction for the first freeform surface 102 is within the range of -2H and 2H for all surface heights/diameters r.

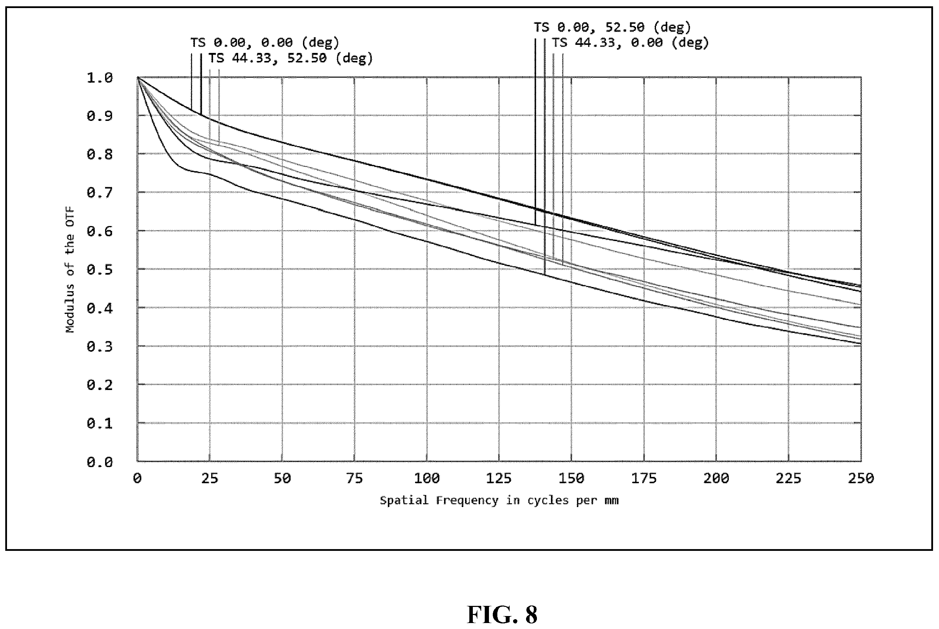

FIG. 8 illustrates the Modulation Transfer Function (MTF) for on-axis as well as off-axis fields of the optical imaging system 100 of FIG. 4.

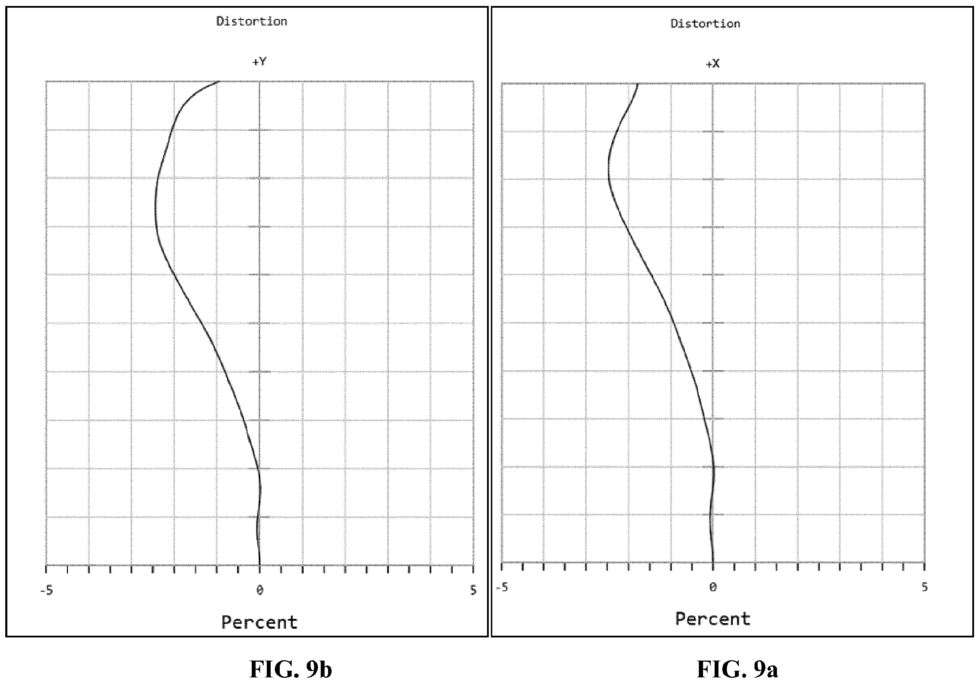

FIG. 9a and 9b illustrate the optical distortion along x- and y-axis, respectively, at a central design wavelength of 588 nm, for the optical imaging system 100 of FIG. 4.

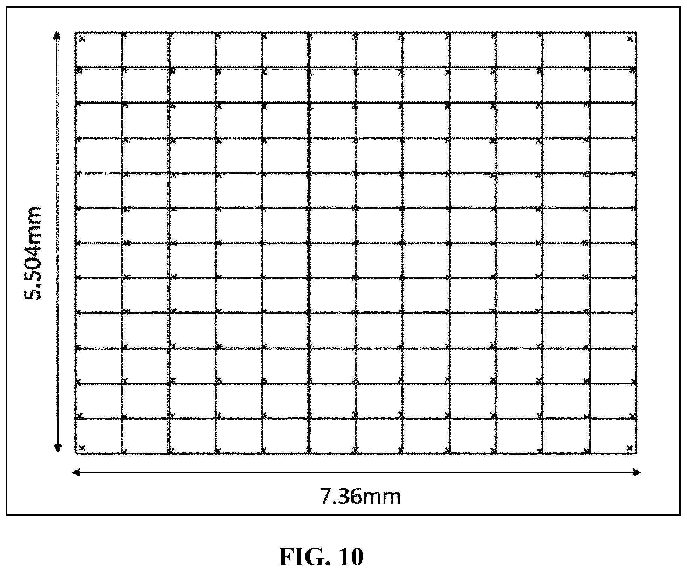

Furthermore, FIG. 10 illustrates the grid distortion on a rectangular image sensor at the central design wavelength of 588 nm, for the optical imaging system 100 of FIG. 4. As it can be derived from FIG. 10, the optical distortion is between -2.49% and 0% and the SMIA TV-distortion is smaller than 1.5%.

The optical imaging system 100 of FIG. 4 may provide a very high Modulation Transfer Function (MTF) (e.g., illustrated in FIG. 8) and a low distortion (e.g., illustrated in FIGs. 9a, 9b and FIG. 10).

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An optical imaging system (100), comprising:
two or more freeform surfaces (102, 103) arranged sequentially in direction of a light path through the optical imaging system (100),
wherein the two or more freeform surfaces (102, 103) comprise a first freeform surface (102) having a XY polynomial freeform, and a second freeform surface (103) having an anamorph freeform,
wherein the first freeform surface (102) is arranged before the second freeform surface (103) in direction of the light path through the optical imaging system,
wherein:
the XY polynomial freeform (102) is determined by coefficients corresponding to *xⁿy^{m}* terms, **characterized in that**
only terms with a product of n and m being an even number have a non-zero value.

2. The optical imaging system (100) according to claim 1, wherein:
a sag-height profile of the first freeform surface (102) is different than a sag-height profile of the second freeform surface (103).

3. The optical imaging system (100) according to one of the claims 1 or 2, further comprising:
one or more freeform lens elements (202), wherein each freeform lens element includes the first freeform surface (102) on one side of the freeform lens element (202) and the second freeform surface (103) on an opposite side of the freeform lens element (202).

4. The optical imaging system (100) according to claim 3, wherein
the one or more freeform lens elements (202) are arranged as a first set of lenses and/or as a last set of lenses in direction of the light path through the optical imaging system.

5. The optical imaging system (100) according to claim 3 or 4, wherein:
the one or more freeform lens elements (202) are made of glass and/or optical transparent material.

6. The optical imaging system (100) according to one of the claims 1 to 5, further comprising:
seven or more lens elements.

7. The optical imaging system (100) according to one of the claims 1 to 6, further comprising a plurality of lens elements, wherein:
- a first group of lens elements (401) is arranged in front of an aperture stop of the optical imaging system (100) such that chief-ray angles over the Field of View, FOV, entering the first lens group are larger than chief-ray angles over the FOV leaving the first lens group.

8. The optical imaging system (100) according to claim 7, wherein:
- a second group of lens elements (402) is arranged between the aperture stop of the optical imaging system (100) and the last or second last lens element of the optical imaging system, wherein the second group (402) comprises one or more lens elements and has the highest refractive power of all of lens groups of the optical imaging system (100).

9. The optical imaging system (100) according to claim 8, wherein:
- a third group of lens elements (403) is arranged between the second group (402) and including the last lens element of the optical imaging system, wherein each lens element in the third group (403) has two or more inflection points across its sag-height profile cross-section.

10. The optical imaging system (100) according to one of the claims 1 to 9, wherein: at least one lens element has a ratio of an edge-thickness to a center-thickness of less than three.

11. The optical imaging system (100) according to one of the claims 1 to 10, wherein:
a ratio of a total track length of the optical imaging system to an image height of an image produced by the optical imaging system is less than two.

12. A camera system (200), comprising:
an image sensor (201), and
the optical imaging system (100) according to one of the claims 1 to 11, configured to produce an image on the image sensor (201).

13. The camera system (200) according to claim 12, wherein:
the first freeform surface (102) and/or the second freeform surface (103) of the optical imaging system has a radial asymmetry, with a ratio of the tangential curvature of the sag-height profile cross-section in the direction of one of the image sensor (201) axes to the tangential curvature of the sag-height profile cross-section in the perpendicular direction, at all radial distances from the optical axis, is between -2H and +2H, wherein H is an aspect ratio of the image sensor (201).

## Patentansprüche

1. Optisches Abbildungssystem (100), umfassend:
zwei oder mehr Freiformoberflächen (102, 103), die in Richtung eines Lichtwegs durch das optische Abbildungssystem (100) nacheinander angeordnet sind,
wobei die zwei oder mehr Freiformoberflächen (102, 103) eine erste Freiformoberfläche (102), die eine XY-Polynom-Freiform aufweist, und eine zweite Freiformoberfläche (103), die eine anamorphe Freiform aufweist, umfassen,
wobei die erste Freiformoberfläche (102) in Richtung des Lichtwegs durch das optische Abbildungssystem vor der zweiten Freiformoberfläche (103) angeordnet ist,
wobei:
die XY-Polynom-Freiform (102) durch Koeffizienten bestimmt wird, die den Ausdrücken *xⁿy^{m}* entsprechen, **dadurch gekennzeichnet, dass** nur Ausdrücke, bei denen das Produkt von *n* und *m* eine gerade Zahl ist, einen Wert von ungleich Null aufweisen.

2. Optisches Abbildungssystem (100) nach Anspruch 1, wobei:
sich das Sagittalhöhenprofil der ersten Freiformoberfläche (102) von einem Sagittalhöhenprofil der zweiten Freiformoberfläche (103) unterscheidet.

3. Optisches Abbildungssystem (100) nach einem der Ansprüche 1 oder 2, ferner umfassend:
ein oder mehrere Freiformlinsenelemente (202), wobei jedes Freiformlinsenelement die erste Freiformoberfläche (102) auf einer Seite des Freiformlinsenelements (202) und die zweite Freiformoberfläche (103) auf einer gegenüberliegenden Seite des Freiformlinsenelements (202) beinhaltet.

4. Optisches Abbildungssystem (100) nach Anspruch 3, wobei das eine oder die mehreren Freiformlinsenelemente (202) in Richtung des Lichtwegs durch das optische Abbildungssystem als ein erster Satz Linsen und/oder als ein letzter Satz Linsen angeordnet sind.

5. Optisches Abbildungssystem (100) nach Anspruch 3 oder 4, wobei:
das eine oder die mehreren Freiformlinsenelemente (202) aus Glas und/oder einem optisch transparenten Material hergestellt sind.

6. Optisches Abbildungssystem (100) nach einem der Ansprüche 1 bis 5, ferner umfassend:
sieben oder mehr Linsenelemente.

7. Optisches Abbildungssystem (100) nach einem der Ansprüche 1 bis 6, ferner umfassend eine Vielzahl von Linsenelementen, wobei:
- eine erste Gruppe von Linsenelementen (401) derart vor einer Aperturblende des optischen Abbildungssystems (100) angeordnet ist, dass Hauptstrahlwinkel über dem Sichtfeld, FOV, die in die erste Linsengruppe eintreten, größer als Hauptstrahlwinkel über dem FOV, welche die erste Linsengruppe verlassen, sind.

8. Optisches Abbildungssystem (100) nach Anspruch 7, wobei:
- eine zweite Gruppe von Linsenelementen (402) zwischen der Aperturblende des optischen Abbildungssystems (100) und dem letzten oder dem vorletzten Linsenelement des optischen Abbildungssystems angeordnet ist, wobei die zweite Gruppe (402) ein oder mehrere Linsenelemente umfasst und die höchste Brechkraft aller Linsengruppen des optischen Abbildungssystems (100) aufweist.

9. Optisches Abbildungssystem (100) nach Anspruch 8, wobei:
- eine dritte Gruppe von Linsenelementen (403) zwischen der zweiten Gruppe (402) und einschließlich dem letzten Linsenelement des optischen Abbildungssystems angeordnet ist, wobei jedes Linsenelement in der dritten Gruppe (403) zwei oder mehr Inflektionspunkte über seinen Sagittalhöhenprofilquerschnitt aufweist.

10. Optisches Abbildungssystem (100) nach einem der Ansprüche 1 bis 9, wobei: mindestens ein Linsenelement ein Verhältnis von einer Randdicke zu einer Mittendicke von weniger als drei aufweist.

11. Optisches Abbildungssystem (100) nach einem der Ansprüche 1 bis 10, wobei:
ein Verhältnis einer gesamten Streckenlänge des optischen Abbildungssystems zu einer Bildhöhe eines Bilds, das durch das optische Abbildungssystem erzeugt wird, kleiner als zwei ist.

12. Kamerasystem (200), umfassend:
einen Bildsensor (201) und
das optische Abbildungssystem (100) nach einem der Ansprüche 1 bis 11, das dazu konfiguriert ist, ein Bild auf dem Bildsensor (201) zu erzeugen.

13. Kamerasystem (200) nach Anspruch 12, wobei:
die erste Freiformoberfläche (102) und/oder die zweite Freiformoberfläche (103) des optischen Abbildungssystems eine radiale Asymmetrie aufweisen, wobei das Verhältnis der tangentialen Krümmung des Sagittalhöhenprofilquerschnitts in der Richtung einer der Achsen des Bildsensors (201) zu der tangentialen Krümmung des Sagittalhöhenprofilquerschnitts in der senkrechten Richtung bei allen radialen Abständen von der optischen Achse zwischen -2H und +2H beträgt, wobei H ein Seitenverhältnis des Bildsensors (201) ist.

## Revendications

1. Système d'imagerie optique (100), comprenant :
deux surfaces de forme libre ou plus (102, 103) agencées séquentiellement dans la direction d'un trajet lumineux à travers le système d'imagerie optique (100),
dans lequel les deux surfaces de forme libre ou plus (102, 103) comprennent une première surface de forme libre (102) ayant une forme libre polynomiale XY, et une seconde surface de forme libre (103) ayant une forme libre anamorphique,
dans lequel la première surface de forme libre (102) est agencée avant la seconde surface de forme libre (103) dans la direction du trajet lumineux à travers le système d'imagerie optique,
dans lequel :
la forme libre polynomiale XY (102) est déterminée par des coefficients correspondant aux termes *xⁿy^{m}*, **caractérisé en ce que**
seuls les termes dont le produit de *n* et *m* est un nombre pair ont une valeur non nulle.

2. Système d'imagerie optique (100) selon la revendication 1, dans lequel :
un profil de hauteur de flèche de la première surface de forme libre (102) est différent d'un profil de hauteur de flèche de la seconde surface de forme libre (103).

3. Système d'imagerie optique (100) selon l'une des revendications 1 ou 2, comprenant en outre :
un ou plusieurs éléments de lentille de forme libre (202), dans lequel chaque élément de lentille de forme libre comporte la première surface de forme libre (102) sur un côté de l'élément de lentille de forme libre (202) et la seconde surface de forme libre (103) sur un côté opposé de l'élément de lentille de forme libre (202).

4. Système d'imagerie optique (100) selon la revendication 3, dans lequel
les un ou plusieurs éléments de lentille de forme libre (202) sont agencés comme un premier ensemble de lentilles et/ou comme un dernier ensemble de lentilles dans la direction du trajet lumineux à travers le système d'imagerie optique.

5. Système d'imagerie optique (100) selon la revendication 3 ou 4, dans lequel :
les un ou plusieurs éléments de lentille de forme libre (202) sont en verre et/ou en matériau optiquement transparent.

6. Système d'imagerie optique (100) selon l'une des revendications 1 à 5, comprenant en outre :
sept éléments de lentille ou plus.

7. Système d'imagerie optique (100) selon l'une des revendications 1 à 6, comprenant en outre une pluralité d'éléments de lentille, dans lequel :
- un premier groupe d'éléments de lentille (401) est agencé devant un diaphragme d'ouverture du système d'imagerie optique (100) de sorte que les angles des rayons principaux sur le champ de vision, FOV, entrant dans le premier groupe de lentilles sont plus grands que les angles des rayons principaux sur le FOV sortant du premier groupe de lentilles.

8. Système d'imagerie optique (100) selon la revendication 7, dans lequel :
- un deuxième groupe d'éléments de lentille (402) est agencé entre le diaphragme d'ouverture du système d'imagerie optique (100) et le dernier ou l'avant-dernier élément de lentille du système d'imagerie optique, dans lequel le deuxième groupe (402) comprend un ou plusieurs éléments de lentille et a la puissance réfractive la plus élevée de tous les groupes de lentilles du système d'imagerie optique (100).

9. Système d'imagerie optique (100) selon la revendication 8, dans lequel :
- un troisième groupe d'éléments de lentille (403) est agencé entre le deuxième groupe (402) et comportant le dernier élément de lentille du système d'imagerie optique, dans lequel chaque élément de lentille du troisième groupe (403) a deux points d'inflexion ou plus sur sa section transversale de profil de hauteur de flèche.

10. Système d'imagerie optique (100) selon l'une des revendications 1 à 9, dans lequel : au moins un élément de lentille a un rapport entre une épaisseur de bord et une épaisseur de centre inférieur à trois.

11. Système d'imagerie optique (100) selon l'une des revendications 1 à 10, dans lequel :
un rapport entre une longueur de trajet totale du système d'imagerie optique et une hauteur d'image produite par le système d'imagerie optique est inférieur à deux.

12. Système de caméra (200), comprenant :
un capteur d'image (201), et
le système d'imagerie optique (100) selon l'une des revendications 1 à 11, configuré pour produire une image sur le capteur d'image (201).

13. Système de caméra (200) selon la revendication 12, dans lequel :
la première surface de forme libre (102) et/ou la seconde surface de forme libre (103) du système d'imagerie optique ont une asymétrie radiale, avec un rapport entre la courbure tangentielle de la section transversale de profil de hauteur de flèche dans la direction de l'un des axes du capteur d'image (201) et la courbure tangentielle de la section transversale du profil de hauteur de flèche dans la direction perpendiculaire, à toutes les distances radiales de l'axe optique, compris entre -2H et +2H, dans lequel H est un rapport d'aspect du capteur d'image (201).
